# EUROPÄISCHE PATENTSCHRIFT

(11) **EP 0 450 038 B1**
(45) Veröffentlichungstag und Bekanntmachung des Hinweises auf die Patenterteilung: **02.03.1994**
(21) Anmeldenummer: 90915982.4
(22) Anmeldetag: 19.10.1990
(51) Int. Cl.: B60S 1/04

(54) **VERFAHREN UND VORRICHTUNG ZUR MONTAGE EINER WISCHANLAGE**
PROCESS AND DEVICE FOR ASSEMBLING A WIPER SYSTEM
PROCEDE ET DISPOSITIF POUR MONTER UN ESSUIE-GLACE

(30) Priorität: 25.10.1989 DE 3935465
(43) Veröffentlichungstag der Anmeldung: 09.10.1991
(73) Patentinhaber: ITT Automotive Europe GmbH, 60488 Frankfurt am Main (DE)
(72) Erfinder: EGNER-WALTER, Bruno, D-7100 Heilbronn (DE); MACH, Jiri, D-7057 Leutenbach 2 (DE); PROHASKA, Hans, D-7120 Bietigheim-Bissingen (DE)
(86) Internationale Anmeldenummer: EP9001775
(87) Internationale Veröffentlichungsnummer: WO9106450

(56) Entgegenhaltungen:
- WO-A-90/06249
- DE-U- 8 812 550

## Beschreibung

Die Erfindung bezieht sich auf ein Verfahren und eine Vorrichtung zur Montage einer Wischanlage an einem Kraftfahrzeug.

Bei den üblicherweise verwendeten Wischeranlagen sind der Antriebsmotor und die Lager für die Wischerwellen an einem Tragrahmen befestigt, wobei die Antriebsgestängeglieder von der Abtriebskurbel des Motors zu den in den Lagerbuchsen schwenkbar gelagerten Wischerwellen bereits betriebsfertig eingehängt sind. In manchen Fällen sind sogar vom Wischanlagen-Hersteller bereits die Wischhebel auf den Wischerwellen montiert, so daß dem Kraftfahrzeug-Hersteller eine in vollem Umfange betriebsfertige Baueinheit geliefert wird, deren Montage ohne zeitraubenden Aufwand möglich ist. Eine Wischanlage dieser Art ist in der DE-OS 2 056 672 beschrieben.

Daneben gibt es auch Wischanlagen, die erst nach der Montage einzelner Elemente an einem Kraftfahrzeug betriebsfertig zur Verfügung stehen. Dabei werden also von dem Wischanlagen-Hersteller einzelne Elemente, beispielsweise also die Lagerbuchsen mit den eingesetzten Wischerwellen und der Antriebsmotor sowie die Gelenkstangen als Einzelteile dem Kraftfahrzeug-Hersteller zugeliefert, der diese Einzelteile in separaten Arbeitsgängen an der Karosserie befestigen bzw. montieren muß. Der Arbeitsaufwand beim Kraftfahrzeug-Hersteller ist dann natürlich wesentlich höher. Andererseits kann aber bei diesem System ein zusätzlicher Tragrahmen entfallen, der hier gewissermaßen durch die Karosserie ersetzt wird.

Daneben gibt es Kombinationen beider Systeme. So kann man den Wischermotor mit einer Lagerbuchse zu einer Baueinheit vormontieren und dem Kraftfahrzeug-Hersteller zusammen mit der anderen Lagerbuchsenanordnung und der einen Gelenkstange anliefern. Ein System dieser Art ist in der DE-AS 2 529 949 beschrieben.

Schließlich gibt es auch Wischanlagen, bei denen das Wischblatt translatorisch über eine Windschutzscheibe bewegt wird. Bei solchen Wischanlagen müssen am Rand der Windschutzscheibe Führungselemente zur Führung des Wischblattes befestigt werden. Wenn man zum Antrieb des Scheibenwischers Seilzüge verwendet, benötigt man in den Eckbereichen der Windschutzscheibe Umlenkrollen. Der Seilzug ist dann meist auch in einem Führungsrohr verlegt, das auch an der Kraftfahrzeug-Karosserie gehalten werden muß. Insbesondere ist dazu festzustellen, daß gerade eine solche Anlage aus sehr vielen Bauteilen aufgebaut ist, die an voneinander entfernt liegenden Stellen einer Kraftfahrzeug-Karosserie befestigt werden müssen. Dabei handelt es sich um Befestigungsbereiche, die nur einen vergleichsweise geringen Montageraum bieten, so daß die Verwendung eines Tragrahmens nach dem Prinzip der erstgenannten Wischanlage bei diesen Ausführungen praktisch nicht möglich ist. Bisher war daher eine Einzelmontage dieser verschiedenen Bauteile erforderlich.

Der vorliegenden Erfindung liegt nun die Aufgabe zugrunde, das Verfahren zur Montage solcher Wischanlagen zu vereinfachen und außerdem eine geeignete Vorrichtung bereitzustellen.

Diese Aufgabe wird erfindungsgemäß mit den kennzeichnenden Merkmalen des Anspruchs 1 gelöst.

Die Erfindung basiert wesentlich auf der Erkenntnis, daß man ohne wesentliche Erhöhung der Kosten dem Kraftfahrzeug-Hersteller auch in einem solchen Fall eine vormontierte Baueinheit anliefern kann, indem die Karosserie selbst die Tragrahmenfunktion übernimmt, wenn einzelne Bauteile dieser Wischeranlage zunächst lösbar an einem Transportträger lagerichtig zu den späteren Befestigungsstellen an der Kraftfahrzeug-Karosserie festgelegt werden, wobei dann diese Montageeinheit aus Wischanlage und Transportträger beim Kraftfahrzeug-Hersteller auf die Karosserie des Kraftfahrzeugs montagegerecht aufgesetzt und später die Verbindung zwischen den einzelnen Bauteilen der Wischanlage und dem Transportträger wieder gelöst wird. Der Transportträger kann dann dem Wischanlagen-Hersteller für den nächsten Montagevorgang wieder zur Verfügung gestellt werden.

Dabei wird der Montagevorgang bevorzugt so durchgeführt, daß die Verbindung zwischen den einzelnen Bauteilen und dem Transportträger erst gelöst wird, wenn diese einzelnen Bauteile der Wischanlage an der Kraftfahrzeug-Karosserie betriebsfertig fixiert sind. Das bedeutet nämlich, daß eine korrekte Ausrichtung aller Bauteile bereits beim Wischanlagen-Hersteller möglich ist und diese korrekte Ausrichtung dann wegen der starren Verbindung über den Transportträger fehlerfrei beim Kraftfahrzeug-Hersteller auf die Karosserie übertragen wird. Eine beim Wischanlagen-Hersteller vorgenommene Funktionsprüfung der Wischanlage muß daher nicht notwendigerweise beim Kraftfahrzeug-Hersteller wiederholt werden, wodurch Montagekosten bei der Herstellung des Kraftfahrzeugs entfallen.

Dieser letztgenannte Vorteil ist insbesondere dann wichtig, wenn es um die erwähnte Wischanlage mit einem über Seilzug angetriebnenen translatorisch bewegbaren Wischer geht. Bei solchen Ausführungen kann nämlich das die Seilenenden verbindende Spannelement bereits beim Wischanlagenhersteller auf den richtigen Wert vorgespannt werden.

Eine besonders exakte Montage wird dann erreicht, wenn die Bauteile der Wischanlage zunächst beim Wischanlagenhersteller direkt an einer als Lehre dienenden Karosserie befestigt werden. Die einzelnen Bauteile werden exakt justiert und dann am Transportträger fixiert. Nach der Demontage der einzelnen Bauteile von dieser Karosserielehre wird dann der Transportträger mit den daran fixierten Bauteilen dem Kraftfahrzeug-Hersteller zugeleitet.

Die Vorrichtung zur Montage einer Wischanlage nach diesem Montageverfahren besteht also aus einem Transportträger, bei dem von einem Zentralkörper Befestigungsarme ausgehen, die jeweils an ihren Enden einen Greifer für das Bauteil aufweisen. Jeder Greifer hat Spann- oder Rastvorrichtungen oder, bei einer bevorzugten Ausführungsform, formschlüssig arbeitende Riegel, über die die Bauteile ohne großen Zeitaufwand lagerichtig zueinander an diesem Transportträger fixiert werden können. Diese Riegel können dabei einzeln verstellbar sein, doch wird eine wesentliche Arbeitserleichterung dann erreicht, wenn man von diesen Riegeln längs der Befestigungsarme Bewegungsübertragungsmittel zu dem Zentralkörper verlegt und an diesem ein Stellglied lagert, über das vorzugsweise alle Riegel zugleich und gleichsinnig verstellt werden können.

Die Erfindung und weitere vorteilhafte Ausgestaltungen werden nachstehend anhand des in der Zeichnung dargestellten Ausführungsbeispiels näher erläutert. Es zeigen:
- Fig. 1: eine Prinzipdarstellung einer Seilzug-Scheibenwischeranlage, deren Bauteile an einem Transportträger festgelegt sind,
- Fig. 2: einen Schnitt entlang der Schnittlinie II-II in Fig. 1,
- Fig. 3: einen Detailschnitt entlang der Schnittlinie III-III in Fig. 2 und
- Fig. 4: eine Prinzipdarstellung eines Verstellmechanismus am Zentralkörper der Transportträgers.

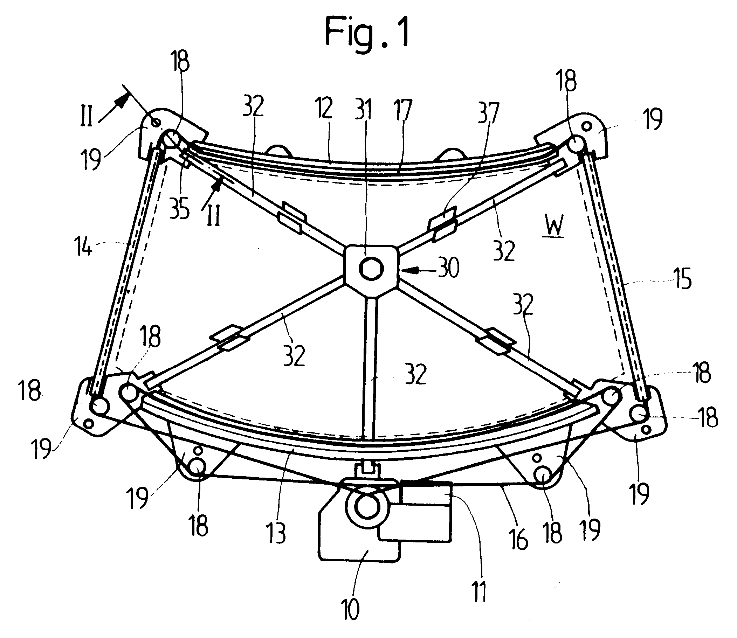

In Fig. 1 ist gestrichelt der Umriß einer Windschutzscheibe W dargestellt, die durch eine Wischeranlage gereinigt werden soll. Zu dieser Wischeranlage gehört ein Wischermotor 10 mit einem angebauten Baustein 11, der eine elektronische Schaltung zur Steuerung des Wischvorgangs aufweist. In unmittelbarer Nähe zu den im wesentlichen horizontal ausgerichteten Scheibenrändern sind zwei Führungsschienen 12 und 13 angeordnet. In der Nähe der fast vertikal verlaufenden Scheibenränder ist jeweils ein Führungsrohr 14, 15 verlegt. Als Antriebselement für den nicht näher dargestellten Scheibenwischer sind Seilzüge 16 und 17 vorgesehen, die längs der Führungsschienen 12, 13 und innerhalb der Führungsrohre 14, 15 verlegt sind und über Umlenkrollen 18 laufen, die an einem plattenartigen Halter 19 drehbar gelagert sind. In Fig. 1 erkennt man vier derartige Halter 19 in den Eckbereichen der Windschutzscheibe W. Zwei weitere Halter 19 sind vorzugsweise einstückig an der unteren Führungsschiene 13 fixiert. Es wird in diesem Zusammenhang darauf hingewiesen, daß die Führungsschienen 12, 13, die Führungsrohre 14, 15 und die Halter 19 zu einer Baueinheit zusammengefügt sein können, d.h. die Führungsschienen und die Führungsrohre können jeweils an den Enden mit den zugeordneten Haltern verbunden sein. Eine transportfähige Baueinheit ist damit aber nicht geschaffen, weil das Führungsrohr üblicherweise gewichtsparend aus Kunststoff geschaffen ist und weil bei der Größe derartiger Anlagen eine ausreichende Verwindungssteifigkeit, die auch einem stark gespannten Seilzug standhält, nicht gewährleistet ist.

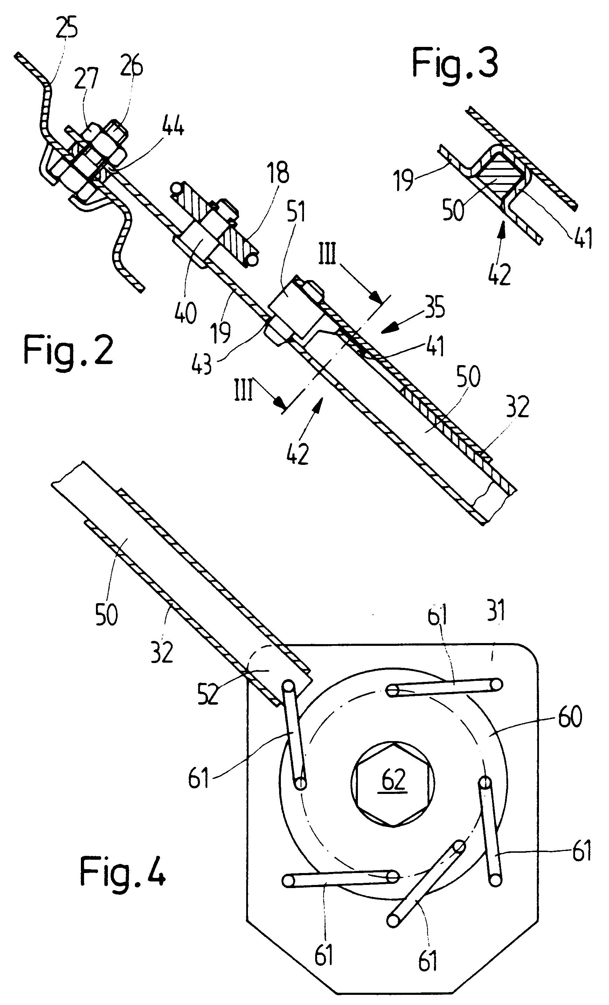

In Fig. 1 ist mit 30 ein Transportträger bezeichnet, zu dem ein Zentralkörper 31 und insgesamt fünf von diesem Zentralkörper radial abstehende Befestigungsarme 32 gehören. Die Befestigungsarme 32 führen zu den Haltern 19 mit den Umlenkrollen 18 in den Eckbereichen der Scheibe sowie zum Wischermotor 10. Alle Befestigungsarme 32 haben haben an ihren vom Zentralkörper 31 abgewandten Enden Greifer 35 für die Halter 19 bzw. ein Tragblech des Wischermotors 10. Diese Greifer werden später anhand der Fig. 2 und 3 näher erläutert. Für die vorliegende Erfindung wesentlich ist, daß dieser spinnenartig aussehende Transportträger 30 eine ausreichende Steifigkeit hat und daß an den Befestigungsarmen 32 einzelne Bauteile, beispielsweise also die Halter 19, lösbar und lagerichtig zu den Befestigungsstellen an der Kraftfahrzeug-Karosserie festgelegt werden können. In Fig. 1 sind noch Distanzhalter 37 angedeutet, an denen ein weiterer Transportträger aufgenommen werden kann. Diese Distanzhalter 37 ermöglichen also ein lagerichtiges Stapeln mehrerer Montageeinheiten aus Wischeranlage und Transportträger.

Zu Fig. 1 ist noch zu erwähnen, daß die Befestigungsarme 32 eine der Windschutzscheibe angepaßte Biegung aufweisen. Damit kann sichergestellt werden, daß beim Montieren der Wischanlage bei schon in das Fahrzeug eingesetzter Windschutzscheibe die Windschutzscheibe nicht beschädigt wird.

Fig. 2 zeigt in einer Prinzipdarstellung das Ende eines Befestigungsarmes 32 mit einem Greifer 35. Der dargestellte Halter 19 ist aus einem Blechstreifen geformt, an dem über einen Bolzen 40 eine Führungsrolle 18 drehbar gelagert ist. Aus dem Blechstreifen ist ein Steg 41 herausgeschnitten und U-förmig abgebogen, wie das in Fig. 3 dargestellt ist. Damit ist eine mit 42 bezeichnete Halteaufnahme gebildet. Außerdem hat der Halter 19 eine Zentrierbohrung 43. Nahe dem freien Ende ist ein Durchbruch 44 in den Halter 19 eingearbeitet, durch den ein an der Karosserie 25 des Fahrzeugs festgelegter, gewissermaßen die Befestigungsstelle an der Karosserie definierender Befestigungsbolzen 26 hindurchragt, auf dessen freies Ende dann eine Befestigungsmutter 27 aufgeschraubt ist. Die Befestigungsarme 32 sind als Rohre ausgebildet, aus denen am freien Ende ein Riegel 50 hervorsteht, der in die Halteaufnahme 42 passend eingreifen kann. An diesen freien Enden der Befestigungsarme 32 ist außerdem ein Zentrierbolzen 51 festgelegt, der in die Zentrierbohrung 43 im Halter 19 passend eingreifen kann.

Fig. 2 zeigt den Montagezustand nach der Befestigung der einzelnen Bauteile an der Karosserie eines Kraftfahrzeugs. Man erkennt aus Fig. 2, daß durch das Zusammenwirken von Zentrierbolzen, Zentrierbohrung sowie Riegel und Halteaufnahme eine lagerichtige, formschlüssige, lösbare Verbindung zwischen dem Halter 19 und dem Befestigungsarm 32 gegeben ist. Nach dem Festziehen der Befestigungsmutter 27 kann diese formschlüssige Verbindung zwischen dem Halter und dem Befestigungsarm 32 wieder gelöst werden, wie dies später noch beschrieben wird.

In Fig. 4 erkennt man den Zentralkörper 31 und einen Befestigungsarm 32, wobei nun an eine Ausführung gedacht ist, bei der dieser Befestigungsarm 32 keine Wölbung aufweist. Dann kann nämlich der Riegel 50 - die Konstruktion versteifend - bis an das andere Ende des Befestigungsarmes 32 heranreichen. An dem Zentralkörper 31 ist drehbar ein als Stellglied dienendes Rad 60 schwenkbar gelagert, an dem eine Schubstange 61 angelenkt ist, die auf das Ende 52 des Riegels 50 wirkt. Wird dieses Rad 60 in Uhrzeigerrichtung gedreht, soll über die Schubstange 61 der Riegel 50 ausgehend von der in Fig. 4 dargestellten Entriegelungsstellung in seine in Fig. 2 dargestellte Verriegelungsstellung gebracht werden. Diese Verriegelungsstellung ist dann erreicht, wenn sich diese Schubstange 61 in Längsrichtung des Riegels 50 erstreckt. Dann wird das Rad 60 drehsicher am Zentralkörper 31 festgelegt, beispielsweise mit diesem mittels einer Schraubverbindung 62 verspannt. Insgesamt ist also zu dieser Ausführung nach Fig. 4 festzustellen, daß die Verstellbewegung eines Riegels 50 über ein geeignetes Getriebe, zu dem die Schubstange 61 gehört, aus einer Drehbewegung eines am Zentralkörper gelagerten Rades 60 abgeleitet wird. Dieses Rad dient dabei als Stellglied. Dabei ist in Fig. 4 noch angedeutet, daß an dem Rad 60 weitere Schubstangen 61 angelenkt sein sollen, über die auch die anderen, aus Gründen einer besseren Übersichtlichkeit nicht dargestellten Riegel verstellt werden. Durch das Stellglied am Zentralkörper 31 sollen also alle Riegel gleichsinnig verstellt werden können, so daß der Arbeitsaufwand bei der Fixierung aller Bauteile am Transportträger sowie auch das Lösen dieses Transportträgers von der ins Kraftfahrzeug installierten Wischanlage mit wenigen Handgriffen möglich ist. Bei Ausführungen mit gewölbten Befestigungsarmen könnte man anstelle durchgehender Riegel auch andere Bewegungsübertragungselemente, beispielsweise Bowdenzüge einsetzen.

Das Verfahren zur Montage der Wischanlage wird wie folgt ausgeführt:

Zunächst werden beim Wischanlagenhersteller alle Bauteile, also auch die Halter 19 in den Eckbereichen, an einer als Lehre dienenden Karosserie festgelegt. Dabei kann die Funktion der Anlage überprüft und bei einer Seilzuganlage ggf. ein in der Zeichnung nicht näher dargestelltes Spannelement nachgestellt werden. Dann werden diese einzelnen Bauteile, also die Halter 19, lösbar an dem Transportträger 30 fixiert. Sie sind dann zwangsläufig schon lagerichtig zu den Befestigungsstellen an der Kraftfahrzeug-Karosserie festgelegt. Die Montageeinheit aus Wischanlage und Transportträger wird dann auf die Karosserie des Kraftfahrzeugs aufgesetzt, wobei die Befestigungsbolzen 26 in die Durchbrüche 44 eingreifen. Dann werden diese einzelnen Bauteile der Wischanlage formstabil an der Kraftfahrzeug-Karosserie verankert. Erst danach wird durch eine Verstellung des Rades 60 entgegen der Uhrzeigerrichtung die Verbindung zwischen den einzelnen Bauteilen und dem Transportträger in einem Arbeitsgang gelöst. Der Transportträger wird dann wieder dem Wischanlagenhersteller zugeliefert.

## Patentansprüche

1. Verfahren zur Montage einer Wischanlage an einem Kraftfahrzeug, wobei einzelne Bauteile der Wischanlage an voneinander entfernt liegenden Stellen der Kraftfahrzeug-Karosserie befestigt werden, dadurch gekennzeichnet, daß die einzelnen Bauteile (19) zunächst lösbar an einer als Transportträger (30) dienenden Vorrichtung lagerichtig zu den Befestigungsstellen (26) an der Kraftfahrzeug-Karosserie (25) festgelegt werden, daß die Montageeinheit aus Wischanlage und Transportträger (30) auf die Karosserie (25) des Fahrzeuges montagerecht aufgesetzt und anschließend die Verbindung zwischen den Bauteilen (19) der Wischanlage und dem Transportträger (30) wieder gelöst wird.

2. Verfahren nach Anspruch 1, dadurch gekennzeichnet, daß die Verbindung zwischen den einzelnen Bauteilen (19) und dem Transportträger (30) erst gelöst wird, wenn die einzelnen Bauteile (19) der Wischanlage an der Kraftfahrzeug-Karosserie (25) betriebsfertig fixiert sind.

3. Verfahren nach Anspruch 1 und 2, wobei zum Antrieb des Scheibenwischers ein Seilzug vorgesehen ist, der über wenigstens zwei auf voneinander unabhängigen Haltern montierten Seilrollen läuft und dessen Enden über ein Spannelement miteinander verbunden sind, wobei diese Halter als Bauteile an voneinander entfernt liegenden Stellen der Kraftfahrzeug-Karosserie befestigt werden, dadurch gekennzeichnet, daß diese Halter lagerichtig am Transportträger fixiert werden und das Spannelement bereits vor dem Transport und dem Einbau der Wischanlage in die Kraftfahrzeug-Karosserie gespannt wird.

4. Verfahren nach wenigstens einem der vorhergehenden Ansprüche, dadurch gekennzeichnet, daß die einzelnen Bauteile zunächst an einer als Lehre dienenden Karosserie betriebsfertig fixiert und gegebenenfalls nach Prüfung der gesamten Wischanlage mit dem Transportträger verbunden werden.

5. Vorrichtung zur Montage einer Wischanlage, die aus mehreren einzelnen Bauteilen aufgebaut ist, die an von einander entfernt liegenden Stellen der Kraftfahrzeug-Karosserie befestigt werden, dadurch gekennzeichnet, daß von einem Zentralkörper (31) formstabile Befestigungsarme (32) ausgehen, die jeweils an ihren Enden einen Greifer (35) für ein Bauteil (19) aufweisen.

6. Vorrichtung nach Anspruch 5, dadurch gekennzeichnet, daß jedem Greifer (35) eine Zentriervorrichtung (51) zur lagerichtigen Aufnahme des Bauteils (19) aufweist.

7. Vorrichtung nach Anspruch 5 oder 6, dadurch gekennzeichnet, daß jeder Greifer (35) einen verstellbaren Riegel (50) aufweist, der formschlüssig in einer Halteaufnahme (42) des Bauteils (19) eingreift.

8. Vorrichtung nach Anspruch 7, dadurch gekennzeichnet, daß längs der Befestigungsarme (32) Bewegungsübertragungsmittel verlegt sind, die eine Verstellung des Riegels (50) von dem Zentralkörper (31) aus ermöglichen.

9. Vorrichtung nach Anspruch 8, dadurch gekennzeichnet, daß am Zentralkörper (31) ein Stellglied (60) verstellbar gelagert ist und alle Riegel (50) durch Betätigung dieses Stellgliedes (60) gleichsinnig verstellbar sind.

10. Vorrichtung nach Anspruch 9, dadurch gekennzeichnet, daß die Verstellbewegung der Riegel (50) über ein Getriebe aus der Drehbewegung eines am Zentralkörper (31) drehbar gelagerten, als Stellglied dienenden Rades (60) abgeleitet wird.

11. Vorrichtung nach wenigstens einem der Ansprüche 4 bis 10, dadurch gekennzeichnet, daß die Befestigungsarme (32) in Anpassung an die zu reinigende Windschutzscheibe gebogen sind.

12. Vorrichtung nach wenigstens einem der Ansprüche 4 bis 11, dadurch gekennzeichnet, daß an dem Zentralkörper (31) und/oder den Befestigungsarmen (32) Distanzhalter (37) zum lagerichtigen Stapeln mehrerer Montageeinheiten bestehend aus Wischeranlage und Transportträger (30) angebracht sind.

## Claims

1. A method for mounting a wiper system on a motor vehicle, in which individual structural members of the wiper system are secured on locations of the motor vehicle body being spaced from each other,
characterized in that the individual structural members (19) are at first mounted detachably on a device serving as a transportation support (30) in proper position relative to the fastening points (26) of the motor vehicle body (25), in that the assembly unit of wiper system and transportation support (30) is put onto the body (25) of the vehicle in proper mounting condition and thereafter the connection between the structural members (19) of the wiper system and the transportation support (30) is released again.

2. A method as claimed in claim 1,
characterized in that the connection between the individual structural members (19) and the transportation support (30) is only detached when the individual structural members (19) of the wiper system are mounted in ready-for-use condition on the motor vehicle body (25).

3. A method as claimed in claims 1 and 2, wherein for driving the windshield wiper a cable is provided which runs on at least two cable rolls fitted on holders independent of each other and the ends of which are connected with each other by a clamping element, and wherein these holders as structural members are fitted in places on the motor vehicle body remote from each other,
characterized in that these holders are fixed on the transportation support in proper position, and in that the clamping element is tensioned already before the transportation and the mounting of the wiper system into the motor vehicle body.

4. A method as claimed in at least one of the preceding claims,
characterized in that the individual structural members at first are mounted in ready-for-use condition on a body serving as a gauge and, if required, after testing the entire wiper system, are connected with the transportation support.

5. A device for mounting a wiper system constructed of several individual structural members which are fitted in places of the vehicle body being remote from each other,
characterized in that dimensionally stable fastening arms (32) extend from a central body (31), the ends of which fastening arms each comprise a grap (35) for a structural member (19).

6. A device as claimed in claim 5,
characterized in that each grap (35) comprises a centering device (51) for receiving the structural member (19) in proper position.

7. A device as claimed in claim 5 or 6,
characterized in that each grap (35) comprises a displaceable latch (50) which engages in a holding seat (42) of the structural member (19) in a form-fit manner.

8. A device as claimed in claim 7,
characterized in that means for transmission of motion are arranged alongside the fastening arms (32) which means make possible a displacement of the latch (50) from the central body (31).

9. A device as claimed in claim 8,
characterized in that on the central body (31) an actuator (60) is adjustably mounted and all latches (50) are displaceable in the same sense by actuating the said actuator (60).

10. A device as claimed in claim 9,
characterized in that the displacement motion of the latches (50) is derived via a gearing from the rotation of a wheel (60) rotatably mounted on the central body (31) and serving as an actuator.

11. A device as claimed in at least one of claims 4 to 10,
characterized in that the fastening arms (32) are bent to be adapted to the windshield to be cleaned.

12. A device as claimed in at least one of claims 4 to 11,
characterized in that spacers (37) are attached on the central body (31) and/or on the fastening arms (32) for stacking several assembly units in proper position which consist of wiper system and transportation support (30).

## Revendications

1. Procédé de montage d'une installation d'essuie-glace sur un véhicule automobile, dans lequel différents composants de l'installation d'essuie-glace sont fixés à des points de la carrosserie du véhicule qui sont éloignés les uns des autres, caractérisé en ce que les différents composants (19) sont fixés de façon démontable à un dispositif servant de support de transport (30), en bonne position par rapport aux points de fixation (26) sur la carrosserie (25) du véhicule, en ce que l'unité de montage, composée de l'installation d'essuie-glace et du support de transport (30), est posée dans la bonne position de montage sur la carrosserie (25) du véhicule et qu'ensuite, la liaison entre les composants (19) de l'installation d'essuie-glace et le support de transport (30) est à nouveau supprimée.

2. Procédé selon la revendication 1, caractérisé en ce que la liaison entre les différents composants (19) et le support de transport (30) n'est supprimée que lorsque les composants (19) de l'installation d'essuie-glace sont fixés prêts à l'emploi à la carrosserie (25) du véhicule.

3. Procédé selon la revendication 1 ou 2, dans lequel il est prévu, pour l'entraînement d'un balai d'essuie-glace, un câble qui passe sur au moins deux poulies à câble montées sur des montures indépendantes l'une de l'autre et dont les extrémité sont réunies l'une à l'autre par l'élément de tension, ces montures sont fixées en tant que composants, sur les points de la carrosserie du véhicule qui sont éloignés les uns des autres, caractérisé en ce que ces montures sont fixées sur le support de transport en bonne position et que l'élément de tension est tendu avant le transport et la mise en place de l'installation d'essuie-glace dans la carrosserie du véhicule.

4. Procédé selon au moins l'une des revendications précédentes, caractérisé en ce que, tout d'abord les différents composants sont fixés dans un état prêt à l'emploi, à une carrosserie servant de gabarit et qu'elles sont fixées au support de transport, éventuellement après essai de l'installation d'essuie-glace.

5. Dispositif pour le montage d'une installation d'essuie-glace qui est composée de plusieurs composants, lesquels sont fixés en des points éloignés les uns des autres de la carrosserie du véhicule, caractérisé en ce que, d'un corps central (31), partent des bras de fixation (32) de forme stable qui présentent chacun à son extrémité une griffe (35) pour un composant (19).

6. Dispositif selon la revendication 5, caractérisé en ce que chaque griffe (35) présente un dispositif de centrage (51) destiné à recevoir le composant (19) en bonne position.

7. Dispositif selon la revendication 5 ou 6, caractérisé en ce que chaque griffe (35) présente un verrou mobile (50) qui s'engage dans un réceptacle de retenue (42) du composant (19) en établissant une liaison par sûreté de forme.

8. Dispositif selon la revendication 7, caractérisé en ce que, le long des bras de fixation (32), sont disposés des moyens de transmission du mouvement qui permettent de manoeuvrer le verrou (50) en agissant sur le corps central (31).

9. Dispositif selon la revendication 8, caractérisé en ce qu'un organe de commande (60) est monté sur le corps central (31) et tous les verrous (60) peuvent être commandés dans le même sens par l'actionnement de cet organe de commande (60).

10. Dispositif selon la revendication 9, caractérisé en ce que le mouvement de déplacement des verrous (50) est pris, par l'intermédiaire d'un mécanisme, sur le mouvement de rotation d'une roue (60) montée rotative sur le corps central (31) et qui sert d'organe de commande.

11. Dispositif selon au moins l'une des revendications 4 à 10, caractérisé en ce que les bras de fixation (32) sont courbés de façon à s'adapter au pare-brise à nettoyer.

12. Dispositif selon au moins l'une des revendications 4 à 11, caractérisé en ce que, sur le corps central (31) et/ou sur les bras de fixation (32) sont montées des entretoises (37) servant à permettre d'empiler en bonne position plusieurs unités de montage composées d'une installation d'essuie-glace et d'un support de transport (30).
